# EUROPÄISCHE PATENTANMELDUNG

(11) **EP 0 645 621 A2**
(43) Veröffentlichungstag der Anmeldung: **29.03.1995**
(21) Anmeldenummer: 94112938.9
(22) Anmeldetag: 18.08.1994
(51) Int. Cl.: G01N 27/16

(54) **Sensoranordnung**

(30) Priorität: 28.09.1993 DE 4333001
(71) Anmelder: SIEMENS AKTIENGESELLSCHAFT, D-80333 München (DE)
(72) Erfinder: Hönig, Eckhardt, Dr., D-91054 Erlangen (DE); Lehmann, Volker, Dr., D-80689 München (DE); Bürker, Ulf, Dr., D-81929 München (DE)

(57) **Zusammenfassung**

Eine Sensoranordnung umfaßt ein Substrat (21) aus dotiertem Silizium, das in einer Hauptfläche (22) Kanäle (23) aufweist, daß eine Selektiveinrichtung zum Nachweis eines Materials, die die Hauptfläche (22) bedeckt, ohne die Kanäle (23) aufzufüllen, und eine Meßeinrichtung zur Aufnahme einer von der Einwirkung eines Materials abhängigen physikalischen Größe. Als Selektiveinrichtung wird insbesondere eine katalytische Schicht (24) und als Meßeinrichtung ein Temperaturfühler (25) verwendet. Alternativ ist die Sensoranordnung als Kondensator mit poröser Gegenelektrode ausgebildet. Die Kanäle werden vorzugsweise durch elektrochemische Ätzung hergestellt.

## Beschreibung

Katalytische Reaktionen sind zum selektiven Nachweis von Gasen oder Flüssigkeiten geeignet. Bei denjenigen katalytischen Reaktionen, die exotherm verlaufen, läßt sich das nachzuweisende Material über eine Temperaturänderung zum Beispiel mit einem tempaturabhängigen Widerstand messen. Bei anderen katalytischen Reaktionen wird das nachzuweisende Material in Reaktionsprodukte gespalten, die wiederum mit einem Sensorelement nachgewiesen werden.

Es ist bekannt (siehe zum Beispiel DE 35 19 485 A1 oder die europäische Patentanmeldung Nr. 88118985.6), als Gassensor eine MOS-artige Halbleiterstruktur zu verwenden, bei der auf einem Halbleiterkörper eine Oxidschicht und darauf eine Elektrode angeordnet ist und bei der die Elektrode aus einem Metall ausgebildet ist, an dessen Oberfläche eine katalytische Reaktion stattfindet. Die Halbleiterstruktur kann dabei als MOS-Transistor oder als Kondensator ausgebildet sein. Bei der katalytischen Reaktion kommt es zur Bildung von Reaktionsprodukten, die durch die Elektrode hindurch in die Oxidschicht und/oder an die Grenzfläche Oxid/Halbleiteroberfläche diffundieren. Dadurch kommt es bei MOS-Transistor zu einer Verschiebung der Einsatzspannung und beim Kondensator zu einer Veränderung der Kapazität. Die Einsatzspannung bzw. die Kapazität werden dann als Meßgröße registriert.

Zur Detektion von Wasserstoff ist es zum Beispiel bekannt, als Katalysator Palladium, Rhodium, Platin oder Nickel zu verwenden. Zum Nachweis von Sauerstoff ist zum Beispiel Silber geeignet. Zum Nachweis von CO ist eine Elektrode aus Palladium geeignet, die eine Vielzahl von bis zur Metall/Oxid-Grenzschicht reichenden Löchern aufweist. β-Karotin ist ebenfalls als Katalysator geeignet.

Unter dem Namen "Pellistor" sind Gassensoren bekannt, die nach dem Prinzip der Kalorimetrie arbeiten. Dabei besteht der Gassensor aus zwei Widerstandsdrähten, auf die je eine poröse Keramikpille aufgesintert ist. Auf der einen der beiden Keramikpillen ist ein Katalysator aufgebracht, an dessen Oberfläche das nachzuweisende Material exotherm reagiert. Durch die Temperaturänderung ergibt sich für den Widerstandsdraht mit der mit Katalysator beschichteten Keramikpille eine Widerstandsänderung gegenüber dem zweiten Widerstandsdraht. Diese Widerstandsänderung wird über eine Brückenschaltung gemessen.

Kalorimetrische Effekte im Zusammenhang mit Katalysatoren sind aus der Literatur bekannt. Wasserstoff verbrennt exotherm in einem Platinkatalysator. NO wird aus NH₃ an einem Katalysator aus Platin oder Platin-Rhodium bei Temperaturen zwischen 200 und 250°C gebildet. NO₂ wird aus NO an einem Katalysator aus Al₂O₃-SiO₂-Gel bei Temperaturen um 100° gebildet. Diese Reaktionen finden in Sauerstoffatmosphäre statt. SO₂ reagiert bei erhöhter Temperatur mit Sauerstoff zu SO₃ an der Oberfläche eines Katalysators aus Platin, Fe₂O₃ oder V₂O₅. CO läßt sich oberhalb von 150°C mit Hilfe eines Katalysators aus Palladium zu CO₂ oxidieren. Bei Temperaturen zwischen 200 und 400°C reagiert Methanol mit Sauerstoff an einem Silber-Katalysator zu HCHO.

Selektiv wirken auch Zeolithe, die unter anderem als Molekularsieb bezeichnet werden. Diese haben die Eigenschaft, Moleküle bestimmter Größenwerte und kleiner durchzulassen, während größere Moleküle am Durchtritt gehindert werden. Es ist bekannt, Schichten aus Zeolith auf Sensoranordnungen als Selektiveinrichtung vorzusehen, um Moleküle einer vorgegebenen Maximalgröße auszuwählen.

Vielfach ist der durch das nachzuweisende Material verursachte Effekt relativ klein, so daß meßbare Signale nur ab einer gewissen Flächengröße der Selektiveinrichtung erzielt werden. Da die bekannten Sensoranordnungen planar sind, ist damit eine Baugröße der Sensoranordnung verbunden, die für viele Anwendungen als störend empfunden wird.

Der Erfindung liegt daher das Problem zugrunde, eine Sensoranordnung anzugeben, bei der die Empfindlichkeit pro Flächeneinheit gegenüber bekannten Sensoranordnungen vergrößert ist. Weiterhin liegt der Erfindung das Problem zugrunde, ein Herstellverfahren für eine solche Sensoranordnung anzugeben.

Dieses Problem wird gelöst durch eine Sensoranordnung nach Anspruch 1 sowie ein Herstellverfahren nach Anspruch 14. Weitere Ausgestaltungen der Erfindung gehen aus den übrigen Ansprüchen hervor.

Die erfindungsgemäße Sensoranordnung umfaßt ein Substrat aus dotiertem Silizium, das in einer ersten Hauptfläche Kanäle aufweist. Die erste Hauptfläche ist mit einer Selektiveinrichtung zum Nachweis eines Materials bedeckt, die die Kanäle nicht auffüllt. Auf diese Weise ist die effektive Fläche der Selektiveinrichtung gegenüber der geometrischen Fläche der Sensoranordnung um ein Vielfaches vergrößert. Mit der Vergrößerung der effektiven Fläche wird eine erhöhte Empfindlichkeit pro geometrischer Flächeneinheit der Sensoranordnung erzielt.

Vorzugsweise werden die Kanäle in der ersten Hauptfläche des Substrats durch elektrochemisches Ätzen erzeugt. Dazu wird ein Substrat aus n-dotiertem Silizium verwendet, dessen erste Hauptfläche mit einem fluoridhaltigen, sauren Elektrolyten in Kontakt gebracht wird. Zwischen den Elektrolyten und das Substrat wird eine Spannung angelegt, so daß das Substrat als Anode verschaltet ist. Die Spannung wird so eingestellt, daß sich eine den Ätzabtrag beeinflussende Stromdichte einstellt.

Da das Substrat bei der elektrochemischen Ätzung als Anode geschaltet ist, bewegen sich Minoritätsladungsträger in dem n-dotierten Silizium zu der mit dem Elektrolyten in Kontakt stehenden ersten Hauptfläche. An dieser bildet sich eine Raumladungszone aus. Da die Feldstärke im Bereich von Vertiefungen in der ersten Hauptfläche größer ist als außerhalb davon, bewegen sich die Minoritätsladungsträger bevorzugt zu diesen Punkten. Dadurch kommt es zu einer Strukturierung der Oberfläche. Je tiefer eine anfänglich kleine Unebenheit durch die Ätzung wird, desto mehr Minoritätsladungsträger bewegen sich wegen der vergrößerten Feldstärke dorthin und desto stärker ist der Ätzangriff an dieser Stelle. Auf diese Weise wachsen die Kanäle in die Tiefe des Substrats.

Auf diese Weise lassen sich Kanäle mit Lochdurchmessern zwischen 20 µm und 50 nm und Lochtiefen bis zu 500 µm gut herstellen. Dadurch lassen sich Oberflächenvergrößerungen um den Faktor 25 bis 2500 erzielen.

Gemäß einer Ausführungsform der Erfindung umfaßt die Selektiveinrichtung eine katalytische Schicht, an deren Oberfläche das nachzuweisende Material exotherm reagiert. Als Meßeinrichtung ist in diesem Fall ein Temperaturfühler vorgesehen, der auf Temperaturänderungen des Substrats empfindlich ist. Die durch die Kanäle stark vergrößerte Oberfläche der katalytischen Schicht bewirkt Temperaturänderungen des Substrats im meßbaren Bereich. Insbesondere wird der Temperaturfühler als temperaturempfindlicher Widerstand auf einer zweiten Hauptfläche, die der ersten Hauptfläche gegenüberliegt, angeordnet. Die katalytische Schicht enthalt insbesondere Palladium, Rhodium, Platin oder Silber.

Gemäß einer weiteren Ausführungsform ist die Sensorsanordnung als Kondensator ausgebildet. Dazu ist auf der ersten Hauptfläche eine dielektrische Schicht angeordnet, die die Kanäle nicht auffüllt. Auf der Oberfläche der dielektrischen Schicht ist eine leitfähige Schicht angeordnet, die die Kanäle nicht auffüllt. Die leitfähige Schicht ermöglicht eine für das nachzuweisende Material charakteristische, selektive Diffusion in die dielektrische Schicht. In diesem Fall bilden die dielektrische Schicht und die leitfähige Schicht die Selektiveinrichtung. Als Meßeinrichtung wirkt der gesamte Kondensator.

In dieser Ausführungsform ist die leitfähige Schicht zum Beispiel nur für das nachzuweisende Material durchlässig. Dieses ist beispielsweise der Fall, wenn die leitfähige Schicht aus amorphem oder polykristallinem, dotiertem Silizium besteht und das nachzuweisende Material Wasserstoff ist.

Alternativ umfaßt die leitfähige Schicht eine katalytische Schicht, an deren Oberfläche das nachzuweisende Material in Fragmente gespalten wird, die durch die leitfähige Schicht in die dielektrische Schicht diffundieren. Als katalytische Schicht ist in diesem Fall zum Beispiel Palladium geeignet.

Es ist ebenfalls möglich, auf oder in der leitfähigen Schicht reaktives chemisches Material oder strahlendes radioaktives Material vorzusehen, das mit dem nachzuweisenden Material unter Bildung von Reaktionsprodukten reagiert, die wiederum in die dielektrische Schicht diffundieren.

Ist die Sensoranordnung als Kondensator ausgebildet, so wird als Meßsignal die Kapazitätsänderung des Kondensators registriert. Dieses wird vorteilhaft in einer Schwingkreisanordnung über dessen Frequenzänderung nachgewiesen. Es liegt im Rahmen der Erfindung, auf dem Substrat eine Dünnfilmspule vorzusehen, die mit dem aus Substrat, dielektrischer Schicht und leitfähiger Schicht gebildeten Kondensator einen Schwingkreis bildet, dessen Freouenzänderung als Sensorsignal meßbar ist. Das Sensorsignal wird vorzugsweise durch induktive Kopplung kontaktlos gemessen.

Die Kanäle in der erfindungsgemäßen Sensoranordnung können sowohl durchgehend als auch einseitig offen sein. Das nachzuweisende Material wird bei durchgehenden Kanälen im Durchfluß durch die Kanäle geleitet. Dadurch wird eine große Ansprechzeit der Sensoranordnung erzielt.

In einseitig offene Kanäle gelangt das Material durch Eindiffusion. In Anwendungen, in denen es als Selektivität und trotz der Sensoranordnung ankommt, ist es vorteilhaft, die Kanäle mit einer Schutzschicht zu verschließen, die für das nachzuweisende Material durchlässig ist. Auf diese Weise werden selektiv störende Fremdkörper und Fremdstoffe von der Sensoranordnung ferngehalten.

Durch Belegung oder Ausfüllung der Kanäle mit reaktivem chemischem Material oder mit strahlendem radioaktivem Material, das zu spezifischen Reaktionen mit dem nachzuweisenden Material führt und Reaktionsprodukte freisetzt, die durch die leitfähige Schicht in die dielektrische Schicht eindiffundieren, kann die Sensoranordnung als chemisches Dosimeter verwendet werden. Als Selektionsmechanismus kann in diesem Fall zusätzlich die reaktive Temperaturerhöhung in den Kanälen genutzt werden.

Die Sensoranordnung ist sowohl zum Nachweis von gasförmigen als auch von flüssigem Material geeignet. Insbesondere ist die Sensoranordnung zum Nachweis von Neutralteilchen in Plasmen geeignet, da die Kanalstruktur plasmaabweisend wirkt. Für diesen Einsatz wird vorzugsweise eine Sensoranordnung mit durchgehenden Kanälen und Kondensatorkontakten auf der plasmaabgewandten Seite verwendet.

Es liegt im Rahmen der Erfindung, auf demselben Substrat die ersten Stufen einer Ausleseelektronik zu realisieren.

Im folgenden wird die Erfindung anhand der Figuren und der Ausführungsbeispiele näher erläutert.
- Figur 1: zeigt eine Sensoranordnung, die als Kondensator ausgebildet ist.
- Figur 2: zeigt eine Sensoranordnung, die nach dem Kalorimeterprinzip funktioniert.
- Figur 3: zeigt eine Sensoranordnung, die als Kondensator ausgebildet ist und die durchgehende Kanäle aufweist.
- Figur 4: zeigt eine Sensoranordnung, die als Kondensator ausgebildet ist und mit der integriert eine Ausleseelektronik in dem Substrat vorgesehen ist.

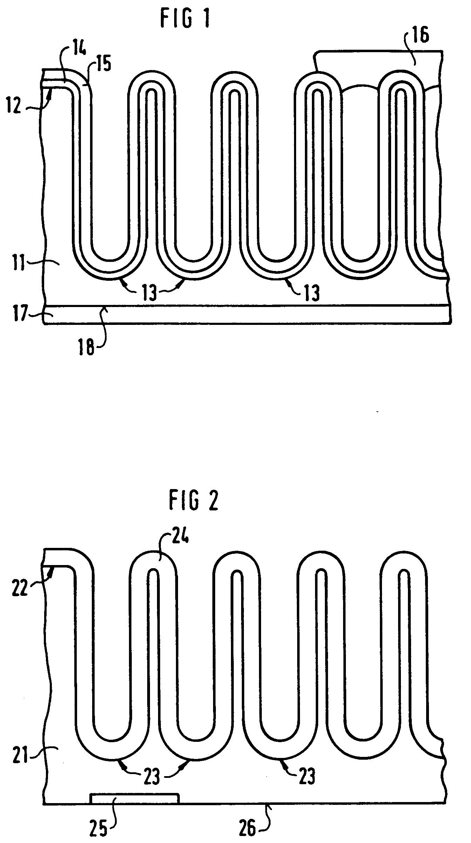

Ein Substrat 11 aus n-dotiertem, einkristallinem Silizium mit einer elektrischen Leitfähigkeit von zum Beispiel 5 Ohm cm weist in einer ersten Hauptfläche 12 Kanäle 13 auf (siehe Figur 1). Die Kanäle 13 weisen einen im wesentlichen runden Querschnitt auf mit einem Durchmesser von zum Beispiel 2 µm. Die Tiefe der Kanäle 13 beträgt zum Beispiel 50 µm. Benachbarte Kanäle 13 sind durch Stege getrennt, die eine Breite von 2 µm aufweisen.

Die Kanäle 13 werden in dem Substrat 11 durch elektrochemisches Ätzen hergestellt. Dazu wird die erste Hauptfläche 2 des Substrats 11 mit einem fluoridhaltigen, sauren Elektrolyten in Kontakt gebracht. Der Elektrolyt weist eine Flußsäurekonzentration von 1 bis 50 Prozent, vorzugsweise 3 Prozent, auf. Dem Elektrolyten kann ein Oxidationsmittel, zum Beispiel Wasserstoffsuperoxid, zugesetzt werden, um die Entwicklung von Wasserstoffbläschen auf der ersten Hauptfläche 12 des Substrats 11 zu unterdrücken.

Das Substrat 11 wird als Anode verschaltet. Zwischen das Substrat 11 und den Elektrolyten wird eine Spannung von 0 bis 20 Volt, vorzugsweise 3 Volt, angelegt. Das Substrat 11 wird von der Rückseite her mit Licht beleuchtet, so daß sich eine Stromdichte von zum Beispiel 10 mA/cm² einstellt. Ausgehend von Unebenheiten in der ersten Hauptfläche 12 werden bei der elektrochemischen Ätzung die Kanäle 13 erzeugt, die senkrecht zur ersten Hauptfläche 12 verlaufen. Nach einer Ätzzeit von etwa 70 Minuten ist eine Tiefe der Kanäle 13 von zum Beispiel 50 µm erreicht.

Die Verteilung der Kanäle 13 über die erste Hauptfläche 12 läßt sich dadurch beeinflussen, daß die erste Hauptfläche 12 vor der elektrochemischen Ätzung mit einer Oberflächentopologie versehen wird. Dazu werden entsprechend der gewünschten Anordnung der Kanäle 13 Vertiefungen zum Beispiel mit Hilfe einer Photolackmaske und anschließender alkalischer Ätzung hergestellt. Diese Vertiefungen dienen bei der elektrochemischen Ätzung als Keime, an denen die elektrochemische Ätzung zur Bildung der Kanäle 13 einsetzt.

Auf der ersten Hauptfläche 12 ist eine dielektrische Schicht 14 angeordnet, die die erste Hauptfläche 12 vollständig bedeckt. Die dielektrische Schicht ist dünner als die Hälfte des Querschnitts der Kanäle 13, so daß die Kanäle 13 von der dielektrischen Schicht 14 nicht aufgefüllt werden. Die dielektrische Schicht 14 besteht zum Beispiel aus SiO₂. In Anwendungen, in denen es auf eine geringe Defektdichte der dielektrischen Schicht 14 ankommt, wird diese vorzugsweise als Schichtkombination SiO₂, Si₃ N₄, SiO₂ (ONO) gebildet.

Die dielektrische Schicht 14 ist mit einer leitfähigen Schicht 15 bedeckt. Die leitfähige Schicht 15 besteht zumindest an ihrer Oberfläche aus einem Material, das das nachzuweisende Material selektiv durchläßt oder das mit dem nachzuweisenden Material reagiert unter Bildung von Reaktionsprodukten, die selektiv in die leitfähige Schicht diffundieren können oder das selektiv mit dem nachzuweisenden Material reagiert. Zum Nachweis von Wasserstoff wird die leitfähige Schicht 15 beispielsweise aus dotiertem amorphem Silizium, dotiertem polykristallinem Silizium oder Palladium gebildet. Die leitfähige Schicht 15 wird in einer solchen Dicke aufgebracht, daß die Kanäle 13 durch die leitfähige Schicht 15 nicht aufgefüllt werden. Dadurch wird sichergestellt, daß die effektive Oberfläche der leitfähigen Schicht 15, an der der Nachweis des Materials erfolgt, größer ist als die Grundfläche der Sensoranordnung.

Das Substrat 11, die dielektrische Schicht 14 und die leitfähige Schicht 15 bilden einen Kondensator. Beim Nachweis des Materials kommt es zu einer Diffusion des Materials bzw. von dafür charakteristischen Reaktionsprodukten durch die leitfähige Schicht 15 in die dielektrische Schicht 14. Dadurch verändert sich die Dielektrizitätskonstante der dielektrischen Schicht 14, was zu einer Änderung der Kapazität des Kondensators führt. Zur Messung der Kapazitätsänderung ist die leitfähige Schicht 15 mit einer ersten Elektrode 16 und das Substrat 11 mit einer zweiten Elektrode 17 versehen. Die erste Elektrode 16 und die zweite Elektrode 17 werden zum Beispiel aus Aluminium gebildet. Die erste Elektrode 16 ist beispielsweise auf der ersten Hauptfläche 12 angeordnet. Sie ist möglichst klein dimensioniert, um die effektive Fläche der Sensoranordnung nicht unnötig zu verkleinern. Die zweite Elektrode 17 ist beispielsweise auf einer zweiten Hauptfläche 18, die der ersten Hauptfläche 12 gegenüberliegt, angeordnet.

Gemäß einer weiteren Ausführungsform der Erfindung ist ein Substrat 21 aus n-dotiertem, einkristallinem Silizium in einer ersten Hauptfläche 22 mit Kanälen 23 versehen. Die Kanäle 23 werden analog dem anhand von Figur 1 gebildeten Ausführungsbeispiel hergestellt. Die Kanäle 23 weisen einen Durchmesser von zum Beispiel 2 µm und eine Tiefe von zum Beispiel 50 µm auf.

Die erste Hauptfläche 22 ist mit einer katalytischen Schicht 24 versehen. Die katalytische Schicht 24 weist eine Dicke auf, die geringer als die Hälfte des Querschnitts der Kanäle 22, zum Beispiel kleiner 1 µm Ist für die Reaktion eine größere Schichtdicke erforderlich, müssen die Durchmesser der Kanäle entsprechend geändert werden. Die katalytische Schicht 24 wird aus einem Material gebildet, an dessen Oberfläche das nachzuweisende Material exotherm reagiert. Durch die exotherme Reaktion kommt es zu einer Veränderung der Temperatur des Substrats 21.

Zur Messung dieser Temperaturänderung ist ein Temperaturfühler 25 vorgesehen, der zum Beispiel auf oder in einer zweiten Hauptfläche 26, die der ersten Hauptfläche 22 gegenüberliegt, angeordnet ist. Als Temperaturfühler 25 eignet sich zum Beispiel ein temperaturabhängiger Widerstand. Dieser kann insbesondere in Dünnfilmtechnik oder als pn-Übergang ausgebildet sein.

Die katalytische Schicht 24 besteht, wenn Wasserstoff nachgewiesen werden soll, zum Beispiel aus Platin. Zum Nachweis von NH₃ durch Erzeugung von NO eignet sich Platin oder Platin-Rhodium als katalytische Schicht. Zum Nachweis von NO durch Bildung von NO₂ eignet sich eine katalytische Schicht aus Al₂O₃-SiO₂-Gel. SO₂ läßt sich durch Oxidation zu SO₃ mit Hilfe der katalytischen Schicht aus Platin, SE₂O₃ oder V₂O₅ nachweisen. CO läßt sich mit der katalytischen Schicht aus Palladium durch Oxidation zu CO₂ nachweisen. Besteht die katalytische Schicht 25 aus Silber, so ist sie zum Nachweis von Methanol durch Oxidation zu HCHO geeignet.

Da viele dieser katalytischen Reaktionen bei erhöhter Temperatur stattfinden, ist es zweckmäßig, die katalytische Schicht 24 zu beheizen. Dieses erfolgt, falls die katalytische Schicht 24 aus einem leitfähigen Material besteht, zum Beispiel durch ohmsche Heizung.

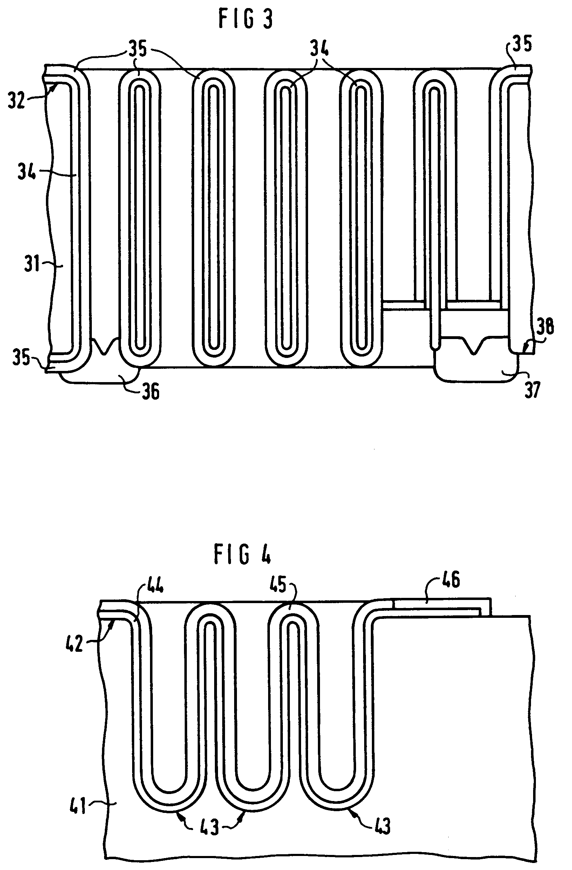

Gemäß einer weiteren Ausführungsform der Erfindung (siehe Figur 3) ist ein Substrat 31 aus n-dotiertem, einkristallinem Silizium mit Kanälen 33 versehen. Die Kanäle 33 durchqueren das gesamte Substrat 31.

Die Kanäle 33 werden zum Beispiel durch elektrochemische Ätzung gebildet. Die elektrochemische Ätzung wird, wie anhand des Ausführungsbeispiels in Figur 1 geschildert, durchgeführt. Dazu wird eine erste Hauptfläche 32 mit dem fluoridhaltigen, sauren Elektrolyten in Kontakt gebracht. Die elektrochemische Ätzung wird fortgesetzt, bis die Kanäle eine zweite Hauptfläche 38, die der ersten Hauptfläche 32 gegenüberliegt, erreicht haben. Dieses ist nach etwa 600 Minuten der Fall.

Die gesamte Oberfläche des Substrats 31 wird mit einer dielektrischen Schicht 34 versehen. Die dielektrische Schicht 34 besteht zum Beispiel aus thermischem Oxid oder einer Schichtenfolge SiO₂, Si₃N₄, SiO₂. Die dielektrische Schicht 34 wird in einer Dicke von zum Beispiel 20 nm erzeugt.

Auf die dielektrische Schicht 34 wird eine leitfähige Schicht 35 aufgebracht. Die leitfähige Schicht 35 umfaßt mindestens an ihrer Oberfläche ein Material, das das nachzuweisende Material selektiv durchläßt, das mit dem nachzuweisenden Material unter Bildung von Reaktionsprodukten reagiert, die selektiv durch die leitfähige Schicht durchdiffundieren, oder das selektiv mit dem nachzuweisenden Material reagiert. Die leitfähige Schicht besteht zum Beispiel aus dotiertem amorphem Silizium, dotiertem polykristallinem Silizium oder Palladium. Die Oberfläche der leitfähigen Schicht 37 kann mit reaktivem chemischem Material oder mit strahlendem radioaktivem Material belegt sein.

Das Substrat 31, die dielektrische Schicht 34 und die leitfähige Schicht 35 bilden einen Kondensator. Zur Messung der Kapazität des Kondensators ist die leitfähige Schicht 35 mit einer ersten Elektrode 36 und das Substrat 31 mit einer zweiten Elektrode 37 versehen. Die erste Elektrode 36 und die zweite Elektrode 37 sind vorzugsweise auf der zweiten Hauptfläche 38 angeordnet. Dazu wird im Bereich der zweiten Elektrode 37 vor der Herstellung der zweiten Elektrode 37 die leitfähige Schicht 35 und die dielektrische Schicht 34 zurückgeätzt, um einen Kontakt zwischen der zweiten Elektrode 37 und dem Substrat 31 zu ermöglichen. Die erste Elektrode 36 und die zweite Elektrode 37 werden zum Beispiel aus Aluminium hergestellt.

Diese Ausführungsform der erfindungsgemäßen Sensoranordnung ermöglicht eine Messung des nachzuweisenden Materials im Durchfluß. Diese Ausführungsform ist besonders geeignet zum Nachweis von Neutralteilchen in Plasmen bei der Plasmaanalyse. Dabei wird die Plasma-abweisende Kanalstruktur genutzt. Die Sensoranordnung wird so ausgerichtet, daß die erste Hauptfläche 32 zum Plasma hingewandt ist, so daß die erste Elektrode 36 und die zweite Elektrode 37 sich auf der Plasma-abgewandten Seite befinden.

Gemäß einer weiteren Ausführungsform wird ein Substrat 41 aus n-dotiertem, einkristallinem Silizium mit einer Leitfähigkeit von zum Beispiel 5 Ohm cm in einer ersten Hauptfläche 42 mit Kanalstrukturen 43 versehen (siehe Figur 4). Die Kanalstrukturen 43 werden analog dem anhand von Figur 1 geschilderten Ausführungsbeispiel durch elektrochemische Ätzung in einem fluoridhaltigen Elektrolyten hergestellt. Die Kanäle 43 weisen einen im wesentlichen runden Querschnitt auf mit einem Durchmesser von zum Beispiel 2 µm. Die Kanäle 43 sind im Bereich der Sensoranordnung über die Fläche verteilt. Benachbarte Kanäle 43 sind durch Stege voneinander getrennt, die eine Breite von zum Beispiel 2 µm aufweisen. Die Tiefe der Kanäle 43 beträgt zum Beispiel 50 µm.

Im Bereich der Kanäle 43 wird die Oberfläche mit einer dielektrischen Schicht 44 belegt. Die dielektrische Schicht 44 besteht zum Beispiel aus SiO₂ oder einer Dreifachschicht aus SiO₂, Si₃N₄, SiO₂ und weist eine Dicke von zum Beispiel 20 nm auf.

An der Oberfläche der dielektrischen Schicht ist eine leitfähige Schicht 45 angeordnet. Die leitfähige Schicht 45 besteht aus einem Material, das ein selektiven Eindiffundieren des nachzuweisenden Materials oder eines Reaktionsproduktes des naczuweisenden Materials in die dielektrische Schicht 44 erlaubt. Die leitfähige Schicht 45 besteht zum Beispiel aus dotiertem amorphem Silizium oder dotiertem polykristallinem Silizium oder Palladium. Die leitfähige Schicht 45 kann an ihrer Oberfläche belegt sein mit katalytischem Material, reaktivem chemischem Material oder strahlendem radioaktivem Material.

Seitlich der Sensoranordnung mit den Kanälen 43 ist an der Oberfläche des Substrats 41 eine Dünnfilmspule 46 angeordnet. Die Dünnfilmspule 46 ist vom Substrat 41 durch eine isolierende Schicht, zum Beispiel die Verlängerung der dielektrischen Schicht 44 auf den Teil der ersten Hauptfläche 42, in dem keine Kanäle 43 angeordnet sind, vom Substrat 41 isoliert. Die Dünnfilmspule 46 ist elektrisch sowohl mit der leitfähigen Schicht 45 als auch mit dem Substrat 41 verbunden. Das Substrat 41, die dielektrische Schicht 44 und die leitfähige Schicht 45 bilden einen Kondensator. Dieser Kondensator und die Dünnfilmspule 46 bilden eine Schwingkreisanordnung. Durch Eindiffusion des nachzuweisenden Materials oder für das nachzuweisende Material charakteristischer Reaktionsprodukte in die dielektrische Schicht 44 ändert sich die Kapazität des Kondensators. Diese Kapazitätsänderung führt zu einer Frequenzänderung der Schwingkreisanordnung. In dieser Ausführungsform der Erfindung kann die Frequenzänderung der Schwingkreisanordnung durch induktive Kopplung unter Vermeidung jeglicher Kontakte gemessen werden. Dieses ist für Betriebssicherheit und Robustheit vorteilhaft.

In dem Substrat 41 können außerhalb der Kanäle 43 ebenfalls die ersten Stufen einer Auslieferelektronik integriert sein.

## Patentansprüche

1. Sensoranordnung
- mit einem Substrat (11, 21, 31, 41) aus dotiertem Silizium, das in einer ersten Hauptfläche (12, 22, 32, 42) Kanäle (13, 23, 33, 43) aufweist,
- mit einer Selektiveinrichtung zum Nachweis eines Materials, die die erste Hauptfläche (12, 22, 32, 42) bedeckt, ohne die Kanäle (13, 23, 33, 43) aufzufüllen,
- mit einer Meßeinrichtung (14, 15; 25; 34, 35; 44, 45) zur Aufnahme einer von der Einwirkung des Materials abhängigen physikalischen Größe.

2. Sensoranordnung nach Anspruch 1,
- bei der die Selektiveinrichtung eine katalytische Schicht (24) umfaßt, an deren Oberfläche das nachzuweisende Material exotherm reagiert,
- bei der die Meßeinrichtung einen Temperaturfühler (25) umfaßt, der auf Temperaturänderungen des Substrats (21) empfindlich ist.

3. Sensoranordnung nach Anspruch 2,
- bei der der Temperaturfühler (25) mindestens einen temperaturempfindlichen Widerstand umfaßt, der auf einer zweiten Hauptfläche (26), die der ersten Hauptfläche (22) gegenüberliegt, angeordnet ist.

4. Sensoranordnung nach Anspruch 2 oder 3,
- bei der die katalytische Schicht (24) Palladium, Rhodium, Platin oder Silber enthält.

5. Sensoranordnung nach Anspruch 1,
- bei der auf der ersten Hauptfläche (12, 32, 42) eine dielektrische Schicht (14, 34, 44) angeordnet ist, die die Kanäle (13, 33, 43) nicht auffüllt,
- bei der auf der Oberfläche der dielektrischen Schicht (14, 34, 44) eine leitfähige Schicht (15, 35, 45) angeordnet ist, die die Kanäle (13, 33, 43) nicht auffüllt und die eine für das nachzuweisende Material charakteristische, selektive Diffusion in die dielektrische Schicht (14, 34, 44) ermöglicht,
- bei der das Substrat (11, 31, 41) und die leitfähige Schicht (15, 35, 45) mit Elektroden (16, 17; 36, 37; 46, 47) versehen sind, so daß die elektrische Kapazität der Anordnung meßbar ist.

6. Sensoranordnung nach Anspruch 5,
- bei der die leitfähige Schicht (15, 35, 45) mindestens eines der Materialien dotiertes Polysilizium, dotiertes amorphes Silizium oder Palladium umfaßt.

7. Sensoranordnung nach Anspruch 5 oder 6,
- bei der oberhalb der leitfähigen Schicht (15, 35, 45) eine nur für das nachzuweisende Material durchlässige Schicht angeordnet ist.

8. Sensoranordnung nach Anspruch 5 oder 6,
- bei der eine katalytische Schicht vorgesehen ist, die von der leitfähigen Schicht (15, 35, 45) umfaßt wird oder die oberhalb der leitfähigen Schicht (15, 35, 45) angeordnet ist und an deren Oberfläche das nachzuweisende Material in Fragmente gespalten wird, die durch die leitfähige Schicht (15, 35, 45) in die dielektrische Schicht (14, 34, 44) diffundieren.

9. Sensoranordnung nach Anspruch 5 oder 6,
- bei der eine Schicht aus reaktivem chemischem Material oder strahlendem radioaktivem Material vorgesehen ist, die von der leitfähigen Schicht (15, 35, 45) umfaßt wird oder oberhalb der leitfähigen Schicht (15, 35, 45) angeordnet ist und an deren Oberfläche das nachzuweisende Material unter Bildung von Reaktionsprodukten reagiert, die in die dielektrische Schicht (14, 34, 44) diffundieren.

10. Sensoranordnung nach einem der Ansprüche 5 bis 9,
- bei der auf dem Substrat (41) eine Dünnfilmspule (46) vorgesehen ist, die mit dem aus Substrat (41), dielektrische Schicht (44) und leitfähiger Schicht (45) gebildeten Kondensator einen Schwingkreis bildet, dessen Frequenzänderung als Sensorsignal meßbar ist.

11. Sensoranordnung nach Anspruch 10,
- bei der das Sensorsignal durch induktive Kopplung kontaktlos meßbar ist.

12. Sensoranordnung nach einem der Ansprüche 1 bis 11,
- bei der die Kanäle (33) durchgehend von der ersten Hauptfläche (32) zur zweiten Hauptfläche (38) verlaufen.

13. Sensoranordnung nach einem der Ansprüche 1 bis 12,
- bei der die Kanäle (33) durch eine Schutzschicht verschlossen sind, die für das nachzuweisende Material durchlässig ist.

14. Verfahren zur Herstellung einer Sensoranordnung nach einem der Ansprüche 1 bis 13,
- bei dem ein Substrat (11, 21, 31, 41) aus n-dotiertem Silizium verwendet wird,
- bei dem die Kanäle (13, 23, 33, 43) in der ersten Hauptfläche (12, 22, 32, 42) durch eine elektrochemische Ätzung in einem fluoridhaltigen, sauren Elektrolyten gebildet werden, wobei die erste Hauptfläche (12, 22, 32, 42) mit dem Elektrolyten in Kontakt steht und zwischen den Elektrolyten und das Substrat (11, 21, 31, 41) eine Spannung angelegt wird, so daß das Substrat (11, 21, 31, 41) als Anode verschaltet wird und so daß sich eine den Ätzabtrag einflussende Stromdichte einstellt,
- bei dem die Selektiveinrichtung als Schicht auf der gesamten Oberfläche der Kanäle abgeschieden wird.

15. Verfahren nach Anspruch 14,
- bei dem das Substrat (11, 21, 31, 41) eine <100>-Scheibe ist.

16. Verfahren nach Anspruch 14 oder 15,
- bei dem durch Beleuchtung der der ersten Hauptfläche (12, 22, 32, 42) die gegenüberliegende zweiten Hauptfläche (18, 26, 38) die den Ätzabtrag beeinflussende Stromdichte eingestellt wird.

17. Verfahren nach einem der Ansprüche 13 bis 16,
- bei dem der Elektrolyt 1 bis 50 Prozent Flußsäure enthält.

18. Verfahren nach Anspruch 17,
- bei dem der Elektrolyt zusätzlich ein Oxidationsmittel enthält.

19. Verfahren nach einem der Ansprüche 13 bis 18,
- bei dem die erste Hauptfläche (12, 22, 32, 42) des Substrats vor der Bildung der Kanäle (13, 23, 33, 43) mit einer Oberflächentopologie versehen wird, die die Anordnung der Kanäle (13, 23, 33, 43) bestimmt.

20. Verfahren nach einem der Ansprüche 13 bis 19,
- bei dem als Selektiveinrichtung eine dielektrische Schicht (14, 34, 44) und eine leitfähige Schicht (15, 35, 45) gebildet werden,
- bei dem die dielektrische Schicht (14, 34, 44) durch thermische Oxidation, durch anodische Oxidation, durch Gasphasenabscheidung von TiO₂ oder durch kombinierte Abscheidung von SiO₂ und Si₃N₄ (ONO) gebildet wird,
- bei dem die leitfähige Schicht durch Gasphasenabscheidung gebildet wird.
